Europäisches Patentamt

European Patent Office

Office européen des brevets

(19)

(11) EP 0 937 977 A1

(12) DEMANDE DE BREVET EUROPEEN

(43) Date de publication:
25.08.1999 Bulletin 1999/34

(51) Int. Cl.⁶: G01N 11/12

(21) Numéro de dépôt: 99470006.0

(22) Date de dépôt: 19.02.1999

(84) Etats contractants désignés:
AT BE CH CY DE DK ES FI FR GB GR IE IT LI LU
MC NL PT SE
Etats d'extension désignés:
AL LT LV MK RO SI

(30) Priorité: 19.02.1998 FR 9802160

(71) Demandeur:
Process Industries (SARL)
54230 Neuves Maisons (FR)

(72) Inventeurs:
• Lefevre, Yves
54500 Vandoeuvre (FR)
• Vanaquer, Fabrice
54550 Pont Saint Vincent (FR)

(74) Mandataire: Poupon, Michel
Cabinet Michel Poupon,
3 rue Ferdinand Brunot
88026 Epinal Cedex (FR)

(54) Capteur de viscosité et régulateur pour le contrôle en continu d'un bain de trempe

(57) L'invention concerne un capteur de viscosité et un appareil comportant un tel capteur.

Le capteur fonctionne sur le principe de la mesure du temps de chute d'un piston (2) dans une chambre de mesure (4) d'un tube calibré immergé dans un bain.

Une came (6), ou un autre moyen de levage, soulève un ensemble mobile cornprenant en partie haute une pièce de détection (8), en partie basse le piston (2), et un ensemble de transmission (9) transmettant au piston le mouvement de la pièce de détection (8).

Un détecteur détecte le passage de deux épaulements (13,10) de la pièce de détection (8) et adresse la informations à un régulateur (31).

Application principale : contrôle en continu d'un bain de trempe

FIG.1

# Description

La présente invention concerne un capteur de viscosité et un appareil comportant un tel capteur, en particulier mais non limitativement pour le contrôle en continu d'un bain de trempe.

Dans de nombreux domaines d'application, l'obtention des propriétés mécaniques nécessaires au bon fonctionnement d'une pièce industrielle passe, après traitement thermique, par une opération de trempe pouvant être effectuée dans différents milieux ; eau, huile, sel fondu, mélange eau-polymère.

Les pièces portées à haute température (environ 900°) sont refroidies jusqu'à la température ambiante en suivant une vitesse de refroidissement contrôlée qui dépend de la nature du fluide utilisé pour la trempe.

Ce pouvoir du bain de trempe à refroidir est appelé drasticité.

Pour l'eau, le sel, l'huile, la drasticité est fixe et donnée par le fournisseur.

Le polymère présente les avantages suivants : produit ininflammable, non polluant, non toxique, lavable à l'eau.

Pour la mélanges eau-polymères, la drasticité dépend :

- du type de polymères utilisé,
- de la concentration
- du vieillissement.

Lors des trempes successives, le bain de polymères se dégrade ;

- vieillissement du produit,
- évaporation de l'eau,
- enlèvement par adhérence aux pièces,
- chocs thermiques,
- présence de particules métalliques et de suie.

L'utilisateur doit donc surveiller régulièrement la qualité de son bain de polymères pour le maintenir à sa valeur de drasticité correcte.

Actuellement, ce contrôle de drasticité se fait :

1. Soit par mesure directe de la drasticité :
A l'aide d'un drasticimètre : appareil mesurant la courbe de refroidissement d'une éprouvette calibrée en argent, plongée dans un bain dont les caractéristiques, volume et agitation, sont connues. Cette méthode est la seule donnant la mesure réelle de la drasticité mais elle met en oeuvre un équipement complexe réservé aux laboratoires.
2. Soit par mesure indirecte :
On mesure un paramètre le plus représentatif possible de la drasticité : indice de réfraction ou viscosité, par différents moyens :

- à l'aide d'un réfractomètre à main : mesure rapide d'atelier permettant de déterminer la concentration en polymères du bain de trempe. C'est une mesure efficace, mais qui ne peut être réalisée que pour un bain neuf ;
- pu viscosimètre : mesure plus précise qu'au réfractomètre à main, mais exclusivement effectuée en laboratoire.

Ces deux types de mesures indirectes actuellement employées ne peuvent être réalisées en continu dans le bain de trempe et a réalisent sur des échantillons prélevés dans le bain.

La commission FLUIDES DE TREMPE de l'A.T.T.T. (Asscciation Technique du Traitement Thermique) préconise la viscosité comme élément à surveiller pour suivre le vieillissement du polymère, la lecture de l'indice de réfraction étant en effet peu précise car sensible à toute sortes de pollution. Elle préconise une mesure à l'aide d'un tube de Ubelhode et a édité une norme en ce sens (extraits article de l'ATT - Lyon - juin 1997).

Pour faciliter le contrôle et la maintenance du bain de trempe, les utlilsateurs ont besoin d'un système de mesure, in situ et un continu, permettant de réguler la qualité du bain.

A l'heure actuelle, il n'existe pas de contrôle en continu de la drasticité ou de la viscosité d'un bain de trempe (dossier Trempe - revue Traitement Thermique - 1997).

Les viscosimètres connus pouvant fonctionner en continu concernent d'autres domaines d'application : alimentaire, résines, peintures et autres ; et aucun n'est adaptable au domaine du traitement thermique ou suffisamment sensible pour les valeurs et précisions demandées.

Le but de la présente invention a été de développer un capteur de viscosité et un appareil de mesure répondant aux besoins spécifiques du contrôle en continu des bains de polymères utilisés pour la trempe des pièces : être robuste (conditions de travail en forges et fonderies), ne pas présenter de dérive ni d'usure, fonctionner avec un moyen d'énergie simple, être insensible aux perturbations extérieures. En plus, ce capteur et cet appareil doivent permettre le calcul et la régulation en continu de la concentration en polymère du bain de trempe.

Pour atteindre ces buts, la demanderesse dû résoudre beaucoup de difficultés successives, notamment concernant la précision du guidage.

Ces buts sont atteints par l'invention qui consiste en un capteur de viscosité fonctionnant sur le principe de la mesure du temps de chute d'un piston centré dans une chambre de mesure d'un tube calibré immergé dans un bain de liquide, comportant un moyen de levage soulevant d'une hauteur prédéterminée un ensemble mobile comportant le piston, et au moins un ensemble de transmission du mouvement au piston , caractérisé en ce que :

- l'ensemble mobile comporte en outre en partie haute une pièce de détection formée principalement d'un corps tubulaire auquel est fixée la tige de l'ensemble de transmission, par exemple au centre d'un disque fermant le corps tubulaire.
- la pièce de détection coulisse longitudinalement à l'intérieur d'un capteur de mesure de forme générale cylindrique portant au moins un détecteur du passage de la pièce ;
- la pièce de détection est soulevée par le moyen de levage par l'intermédiaire d'un doigt fixé radialement sur la pièce de détection et traversant une lumière longitudinale du corps de capteur de mesure.

L'invention consiste également en un appareil comportant le capteur de viscosité ci-dessus et comportant un régulateur électronique recevant les informations envoyées par le détecteur du capteur et déduisant par calcul la viscosité du fluide. L'appareil peut en outre comporter un détecteur de température et en ce que le régulateur électronique déduit par calcul la viscosité équivalente ramenée à une température de référence. Le régulateur est préférentiellement apte à déduire par calcul la concentration d'un mélange eau-polymère en fonction du type de polymère utilisé et à agir sur des vannes pour réguler et réajuster la concentration du bain en fonction des résultats obtenus.

Cet appareil est nommé drasticimètre dans la suite du texte.

On comprendra mieux l'invention à l'aide de la description qui suit faite en référence aux figures annexées suivantes :

- figure 1 : vue en coupe verticale d'un premier mode de réalisation de l'invention ;
- figure 2 : vue en coup verticale d'un deuxième mode de réalisation de l'invention ;
- figure 3 : vue en coupe verticale partielle d'un troisième mode de réalisation de l'invention ;
- figure 4a, 4b, 4c : dessins de la came d'entraînement d'une pièce de détection mobile utillisée dans modes de réalisation des figures 1 à 3 ;
- les figures 5a et 5b montrent en détail le corps de capteur dans lequel coulisse la pièce de détection ;
- figure 6 : vue en coupe verticale partielle d'une variante de l'invention à entraînement pneumatique ;
- figure 7 : organigramme d'un cycle de fonctionnement de l'invention.
- figure 8 : vue en coupe d'un piston montrant une variante de guidage.

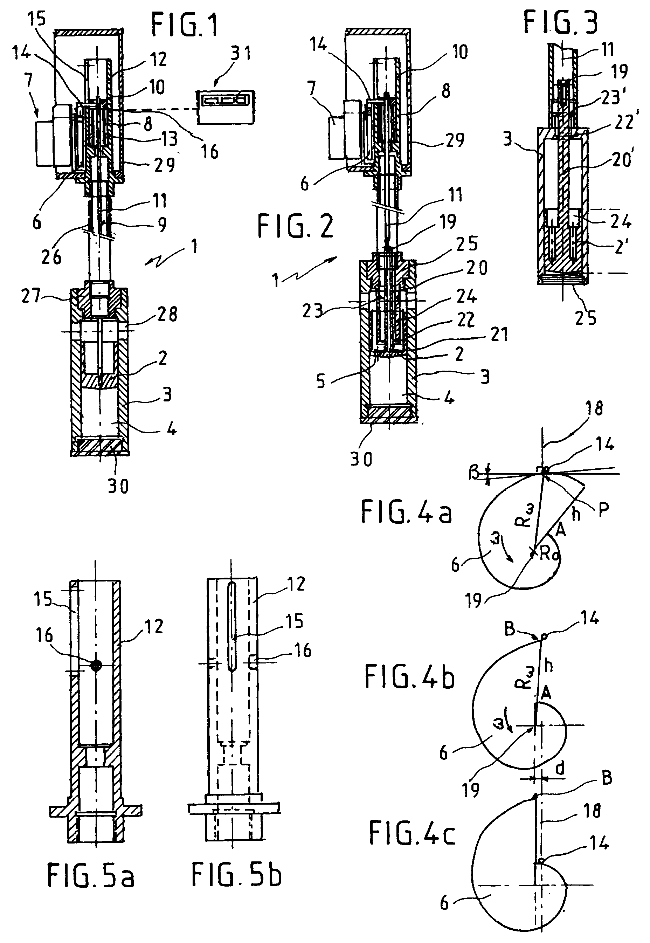

Dans l'un ou l'autre des modes de réalisation non limitatifs des figures 1 à 6, un drasticimètre conforme à l'invention comporte essentiellement : un viscosimètre (1) et régulateur électronique (31).

Le viscosimètre (1) utilise le principe connu de la mesure du temps de chute d'un piston (2) dans un tube calibré (3) immergé dans le bain. Le piston, soulevé mécaniquement par une came (6), permet l'introduction du liquide dans la chambre de mesure (4) du tube calibré. Il est ensuite relàché et tombe par gravité.

Le liquide refoulé de la chambre de mesure (4), ou pénétrant dans celle-ci, circule dans l'espace entre la chemise du tube calibré (3) et le piston (2).

La came (6) entrainée en rotation par un moteur-réducteur (7) tournant pu exemple à 1 tour/min soulève d'une hauteur h (par exemple de 50 mm) un ensemble mobile comprenant :

- en partie haute : une pièce de détection (8)
- en partie basse : le piston (2) centré dans la chambre (4)
- un ensemble de transmission (9) transmettant au piston le mouvement de la pièce de détection.

L'ensemble des organes moteurs : moteur-réducteur (7), came (6), pièce de détection (8) est protégé par un boitier (29).

La pièce de détection (8) comporte principalement un corps tubulaire creux fermé dans sa partie supérieure par un disque débordant (10) au centre duquel est fixée la tige (11) de l'ensemble de transmission (9).

La pièce de détection (8) est guidée dans son coulissement longitudinal l'intérieur d'un corps de capteur (12) de forme générale cylindrique, par le disque (10) et un épaulement périphérique (13) usiné sur le corps de la pièce de détection (8). Elle est soulevée par un doigt (14) fixé radialement dans le disque (10) et dont l'extremité s'appuie sur le profil de la came (6) au travers d'une lumière longitudinale (15) de guidage du corps de capteur (12). La longueur de la lumière est définie par la hauteur de chute totale du doigt (14).

Le disque (10) et l'epaulement (13) remplissent en outre une fonction de détection.

Selon une variante non représentée, le disque (10) peut être remplacé par un autre épaulement périphérique.

Un détecteur (16), par exemple un détecteur de proximité sans contact tel qu'un détecteur inductif, fixé sur le corps de capteur (12) (voir figures 5a, 5b) détecte le passage de l'épaulement (13) et du disque (10).

En utilisant un détecteur unique pour la détection des deux passages, on s'affranchit des différences pouvant exister d'un détecteur à l'autre.

La figure (4a) montre le doigt (14) soulevé par la rotation de la came. Après un tour complet, le doigt (14) passe par un maximum (voir figure 4b) et tombe rapidement du point B au point A, entraîné par le poids du piston et du système de levage (voir figure 4c).

Pour un bon fonctionnement, il est nécessaire de décaler l'axe de levage (18) et l'axe de rotation de la came (19) d'une distance (d) (voir figures 4b et 4c).

Ceci-permet d'éschapper au cas extrême suivant : dans le cas où le mélange testé serait très peu visqueux, la chute du piston serait trop rapide et le doigt tomberait sur le plat de la came au lieu de tomber au point A.

Une valeur optimale de (d) a été déterminée expérimentalement, elle est telle que le doigt (14) tombe instantanément de B vers A sans toucher le plat de la came (figures 4b et 4c).

Par ailleurs, le profil de la came est calculé pour que, au cours d'un cycle, le doigt (14) monte de manière très régulière sur l'axe de levage (18) et que la tangente de la came au point de contact (P) soit le plus proche possible de la normale à l'axe de levage (18) (figure 4a).

Pour ce faire, les inventeurs ont calculé le profil de came pour que l'angle d'attaque β sous le doigt (14) soit pratiquement constant (voir figure 4a).

En un point quelconque du profil de came, le rayon Rω est calculé selon la formule suivante :

$$R\omega = Ro(1 + e)^{\omega}$$

avec

$$e = \left(\frac{Ro + h}{Ro}\right)^{\frac{1}{2\pi}} - 1$$

où

Ro = rayon initial au point de départ A d'un cycle
h = distance entre le point de départ A et le point extrême B d'un cycle de came.
ω = angle de rotation de la came

Un premier mode de réalisation de l'ensemble de transmission (9) est représente à la figure 1 ; il se compose d'une tige (11) dont l'extrémité basse est vissée directement dans le piston (2), ici au fond de celui-ci.

Le tube (26) vissé d'une part sous le corps du capteur et d'autre part sur le bouchon (27) du tube calibré (3) assure la liaison rigide entre tube calibré et organe moteurs. Il assure également l'étanchéité.

La chambre de mesure (4) isole la quantité de liquide servant à la mesure et le met à l'abri des tourbillons et autres perturbations dues au brassage du bain.

Deux orifices (28), de préférence latéraux, permettent de régénérer le liquide de mesure.

Le tube calibré présente un fond fermé, soit monobloc (variante non représentée), soit amovible (bouchon 30).

Ce mode de réalisation de la figure 1 nécessite un axe de chute bien vertical et des centrages et usinages pointus pour éviter des dérives.

Un deuxième mode de réalisation de l'ensemble de transmission (9) est représenté à la figure 2.

Pour éviter de guider l'ensemble de transmission sur toute sa longueur, l'inventeur a eu l'idée d'articuler la tige afin de n'avoir à guider que la partie basse de l'ensemble.

A cet effet, la tige (11) est articulée par un axe de pivotement (19) à l'extrémité supérieure d'un tube de transmission (20) dont le pied (21) est vissé au fond du piston (2) par des vis (5). Le tube (20) pourrait être vissé au fond du piston comme dans le premier mode de réalisation de la figure 1.

Ce tube de transmission (20) est guidé entre deux plans horizontaux, réalisés pu deux arêtes annulaires (22) et (23) à l'intérieur d'un guide (24) tubulaire dont la tête (25) ferme la chambre de mesure (4).

Ce mode de réalisation ne présente pas les dérives du précédent.

Un troisième mode de réalistion, représenté à la figure 3 comporte, comme le précédent, une articulation (19) entre la tige de transmission (11) et le tube de transmission plein (20') formant une seule pièce avec le piston plein (2'). Des perçages (24) allègent le piston (2').

Le guidage est réalisé par deux arêtes annulaires (22') et (23') réalisées directement dans le corps du tube calibré (3).

Le tube calibré (3) est fermé en partie basse par un bouchon (25) avec circlips.

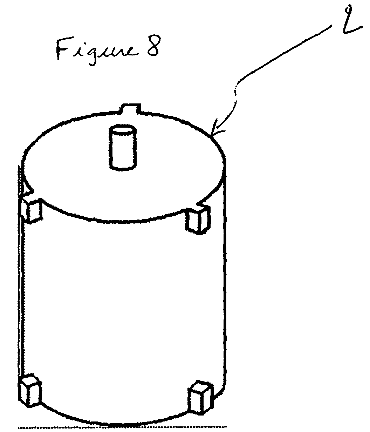

Ce troisième mode de réalisation donne également satisfaction, de plus il nécessite moins d'opération d'usinages. On fera référence ci-après à la figure 8.

Le piston cylindrique (2) est muni de au moins deux couronnes de pointes de centrage, ces couronnes état réparties sur la hauteur du piston, habituellement une sur le diamètre supérieur, et une autre sur le diamètre inférieur.

Chaque couronne comprend au moins trois pointes de centrage (31), réparties sur la circonférence du piston, par exemple : 3 pointes à 120°.

Les pointes sont consituées de petites surfaces de quelques mm2 dont l'enveloppe extérieure est inscrite dans un cylindre de diamètre légèrement inférieur à celui de la chambre, afin d'assurer un positionnement coaxial du piston dans la chambre avec un minimum de frottement.

Le piston est soutenu en partie supérieure par la tige de liaison (11) à la pièce de détection (8) cette tige de liaison n'étant plus guidée dans le tube de liaison (26).

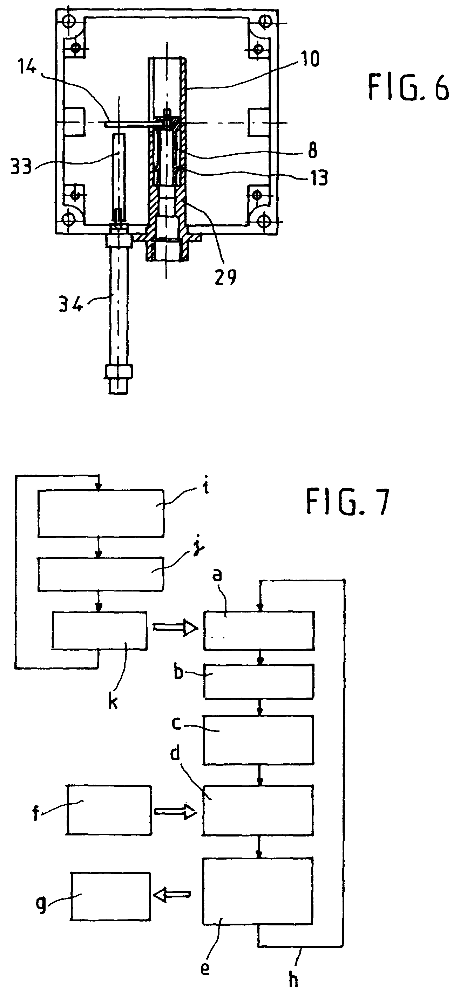

Dans la variante de la figure 6, le doigt est soulevé par la tige (33) d'un vérin double effet (34) à commande pneumatique. Cette version antidéflagrante est utilisable en pétrochimie.

On décrit à présent le fonctionnement de principe du régulateur (31).

Un cycle de fonctionnement de l'appareil est décrit pu l'organigramme de la figure 7. Pour chaque cycle, (montée du piston (i), piston en position haute (j), chute du piston (k) ), les mesures de temps (a) relevés pu le détecteur (16) ainsi que les mesures de températures (b) du bain relevées pu un détecteur de température non représenté, sont adressées à un calculateur du régulateur (c).

Après conversion, les données sont affichées sur un ensemble d'afficheurs et/ou enregistrées sur un enregistreur non représenté.

L'étalonnage de l'appareil est préalablement réalisé par des essais avec différents mélanges eau-polymères et à différentes températures, ou par comparaison avec des mesures de viscosité effectuées avec un viscosimètre étalonné.

Le calculateur déduit pu calcul (c) la visosité du mélange et la viscosité équivalente ramenée à une température de référence (par exemple 20° C).

En informant le régulateur d'une donnée supplémentaire (f) qui est la nature du polymére, il peut calculer sa concentration (d) dans le mélange utilisé (ex : 20% de PAG dans 80% d'eau).

Sur l'écran de l'afficheur (e) nous pourrons ainsi lire :

- la température du bain,
- le temps de chute mesuré,
- la viscosité à la température du bain,
- la viscosité ramenée à 20°C,
- la concentration en polymère.

En fonction des résultats obtenus, on peut prévoir des actions (g) sur des vannes pour réguler et réajuster la concentration et mesurer à nouveau le temps de chute (boucle h).

**Revendications**

1. Capteur de viscosité fonctionnant sur le principe de la mesure du temps de chute d'un piston (2) immergé dans un bain de liquide et centré dans une chambre de mesure (4) d'un tube calibré (3), comportant un moyen de levage soulevant d'une hauteur (h) un ensemble mobile comportant le piston (2), et au moins un ensemble de transmission (9) transmettant au piston (2) le mouvement du moyen de levage, caractérisé en ce que :

   - l'ensemble mobile comporte en outre en partie haute une pièce de détection (8) formée principalement d'un corps tubulaire auquel est fixée la tige (11) de l'ensemble de transmission (9) ;
   - la pièce de détection (8) coulisse longitudinalement à l'intérieur d'un capteur de mesure (12) de forme générale cylindrique portant au moins un détecteur (16) du passage de la pièce (8) ;
   - la pièce de détection (8) est soulevée par le moyen de levage par l'intermédiaire d'un doigt (14) fixé radialement sur la pièce de détection (8) et traversant une lumière longitudinale (15) du corps de capteur de mesure (12).

2. Capteur de viscosité selon la revendication 1, caractérisé en ce que le corps tubulaire est creux et fermé dans sa partie supérieure par un disque au centre duquel est fixée la tige (11) et en ce que le doigt (14) est fixé dans le disque supérieur (10).

3. Capteur de viscosité selon l'une des revendications 1 à 2, caractérisé en ce que le disque (10) forme un épaulement périphérique.

4. Capteur de viscosité selon l'une des revendications 1 à 3, caractérisé en ce que le corps de la pièce de détection (8) comporte un épaulement périphérique (13).

5. Capteur de viscosité selon l'une des revendications 1 à 4, caractérisé en ce que un détecteur unique (16) détecte les passages de deux épaulements (13) et (10).

6. Capteur de viscosité selon la revendication 5, caractérisé en ce que le détecteur (16) est un détecteur de proximité sans contact.

7. Capteur de viscosité selon l'une des revendications 1 à 6, caractérisé en ce que la tige (11) de l'ensemble de transmission (9) est vissée directement dans le piston (2).

8. Capteur de viscosité selon la revendication 7, caractérisé en ce que le piston est muni de au moins deux couronnes de pointage comprenant chacune au moins trois pointes de centrage assurant le positionnement coaxial du piston dans la chambre (4).

9. Capteur de viscosité selon l'une des revendications 1 à 6, caractérisé en ce que la tige (11) est articulée par un axe de pivotement (19) à l'extrémité supérieure d'un tube de transmission (20,20') guidé entre deux arètes annulaires (22,23) ou (22',23').

10. Capteur de vitcosité selon la revendication 9, caractérisé en ce que le pied du tube de transmission (21) est vissé dans le piston et en ce que les deux arètes annulaires (22,23) sont à l'intérieur d'un guide (24) tubulaire dont la tête (25) ferme la chambre de mesure (4).

11. Capteur de viscosité selon la revendication 10, caractérisé en ce que le tube de transmission (20') forme une seule pièce avec le piston plein (2') et en ce que les deux arètes annulaires (22',23') sont réalisées dans le corps du tube calibré (3).

**12.** Capteur de viscosité selon l'une des revendications 1 à 11, caractérisé en ce qu'il comporte en outre un tube (26) vissé d'une part sous le corps du capteur de mesure (12) et d'autre part sur le bouchon (27) du tube calibré (3).

**13.** Capteur de viscosité selon l'une des revendications 1 à 12, caractérisé en ce que le système de levage est un système à vérin pneumatique dont la tige relève le doigt d'une hauteur (h) sur l'axe de levage (18).

**14.** Capteur de viscosité selon l'une des revendications 1 à 12, caractérisé en ce que le système de levage est une came (6) entraînée en rotation dans un plan vertical par un moteur réducteur (7), le doigt (14) s'appuyant sur le profil de came, passe après un tour complet de came per un maximum B puis retombe rapidement au point de départ A en suivant l'axe de levage (18).

**15.** Capteur de viscosité selon la revendication 14, caractérisé en ce que l'axe de levage (18) est décalé d'une distance (d) par rapport à l'axe de rotation de la came.

**16.** Capteur de viscosité selon l'une des revendications 14 à 15, caractérisé en ce que le rayon de la came est calculé selon les formules

$$R\omega = Ro(1 + e)^{\omega}$$

avec

$$e = \left(\frac{Ro + h}{Ro}\right)^{\frac{1}{2\pi}} - 1$$

où

Ro =     rayon initial au point de départ A d'un cycle
h =     distance entre le point de départ A et le point extrême B d'un cycle de came.
$\omega$ =     angle de rotation de la came

**17.** Appareil pour le contrôle continu d'un fluide et la mesure en continu de sa viscosité, caractérisé en ce qu'il comporte un capteur de viscosité selon l'une des revendications 1 à 16, et en ce qu'il comporte un régulateur électronique (31) recevant les informations envoyées par le détecteur (16) du capteur et déduisant par calcul la viscosité du fluide.

**18.** Appareil selon la revendication 17, caractérisé en ce qu'il comporte en outre un détecteur de température et en ce que le régulateur électronique (31) déduit par calcul la viscosité équivalente ramenée à une température de référence.

**19.** Appareil selon l'une des revendications 17 à 18, caractérisé en ce que le régulateur électronique (31) déduit par calcul la concentration d'un mélange eau-polymère en fonction du type de polymère utilisé.

**20.** Appareil selon la revendication 19, caractérisé en ce que régulateur (31) agit sur des vannes pour réguler et réajuster la concentration du bain en fonction des résultats obtenus.

FIG.1

FIG.2

FIG.3

FIG.4a

FIG.4b

FIG.4c

FIG.5a

FIG.5b

FIG. 6

FIG. 7

Figure 8

**Office européen des brevets**

## RAPPORT DE RECHERCHE EUROPEENNE

Numéro de la demande

EP 99 47 0006

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | US 5 569 843 A (POISSANT DANIEL) 29 octobre 1996 * abrégé * | 1 | G01N11/12 |
| A | EP 0 539 753 A (FLEXACT MASCHINEN GMBH) 5 mai 1993 * le document en entier * | 1 | |
| A | FR 1 465 669 A (MANUFACTURE DE FILS ISOLÉS TAURUS (MAFIT)) 29 mars 1967 * le document en entier * | 1,16,19 | |
| A | US 3 371 522 A (NORCROSS AUSTIN S) 5 mars 1968 * abrégé; figure 1 * | 1 | |
| A | US 3 512 396 A (OKAMOTO TSUNEO) 19 mai 1970 * colonne 1; figures 1,5,6 * | 1,8,17, 20 | |
| A | US 4 154 094 A (NORCROSS AUSTIN S) 15 mai 1979 * abrégé * | 1 | **DOMAINES TECHNIQUES RECHERCHES (Int.Cl.6)** G01N |
| A,P | WO 98 11420 A (NORCROSS CORP) 19 mars 1998 * abrégé * | 1,17 | |

Le présent rapport a été établi pour toutes les revendications

| Lieu de la recherche | Date d'achèvement de la recherche | Examinateur |
|---|---|---|
| BERLIN | 18 mai 1999 | Brison, O |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**    EP 99 47 0006

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

18-05-1999

| Document brevet cité au rapport de recherche | | Date de publication | Membre(s) de la famille de brevet(s) | | Date de publication |
|---|---|---|---|---|---|
| US 5569843 | A | 29-10-1996 | AUCUN | | |
| EP 0539753 | A | 05-05-1993 | DE | 9113543 U | 12-03-1992 |
| FR 1465669 | A | 29-03-1967 | AUCUN | | |
| US 3371522 | A | 05-03-1968 | AUCUN | | |
| US 3512396 | A | 19-05-1970 | DE | 1773715 A | 30-12-1971 |
| | | | FR | 1582889 A | 10-10-1969 |
| | | | GB | 1195806 A | 24-06-1970 |
| US 4154094 | A | 15-05-1979 | AUCUN | | |
| WO 9811420 | A | 19-03-1998 | AUCUN | | |

EPO FORM P0460

Pour tout renseignement concernant cette annexe : voir Journal Officiel de l'Office européen des brevets, No.12/82